# FASCICULE DE BREVET EUROPEEN

(11) **EP 2 047 774 B1**
(45) Date de publication et mention de la délivrance du brevet: **01.12.2010**
(21) Numéro de dépôt: 08105302.7
(22) Date de dépôt: 11.09.2008
(51) Int. Cl.: A47D 1/00, B60N 2/60, B62B 9/12

(54) **Housse de poussette**
Schutzhülle für Kinderwagen
Pushchair cover

(30) Priorité: 12.09.2007 FR 0706378
(43) Date de publication de la demande: 15.04.2009
(73) Titulaire: Robin, Nathalie, 75002 Paris (FR)
(72) Inventeur: Robin, Nathalie, 75002 Paris (FR)
(74) Mandataire: Lebkiri, Alexandre

(56) Documents cités:
- DE-U1- 29 820 060
- JP-A- 2001 063 415
- JP-A- 2006 122 417
- US-A- 2 797 743
- US-A- 4 157 839
- US-A- 4 824 168
- US-A- 5 781 946

## Description

La présente invention concerne un dispositif de protection de poussettes par le biais d'une housse, réalisée par exemple en en tissu lavable.

L'utilisation fréquente de la poussette par les mères de famille entraîne régulièrement l'installation d'un linge entre l'enfant et le matelas de la poussette afin de protéger celle-ci, au détriment de la sécurité de l'enfant qui ne peut pas être maintenu correctement dans sa poussette, ledit linge glissant ou obstruant les attaches du harnais de sécurité.

D1 décrit une housse pour protéger les poussettes de l'art antérieur.

L'objet de l'invention propose une solution aux problèmes qui viennent d'être mentionnés.

L'invention concerne donc une housse pour protéger les poussettes caractérisée en ce qu'elle comporte au moins trois ouvertures, une alaise, des attaches supérieures disposées en haut de la housse, lesdites attaches supérieures présentant une longueur ajustable au moyen de boutons, et des attaches inférieures disposées en bas de la housse destinées à assurer une fixation à des barres de la poussette, ladite housse présentant une ouverture inférieure apte à réaliser un emboîtement d'une première extrémité de la poussette.

Outre les caractéristiques principales qui viennent d'être mentionnées dans le paragraphe précédent, la housse pour poussette selon l'invention peut présenter une ou plusieurs caractéristiques supplémentaires parmi les suivantes :
- la housse comporte une ouverture supérieure apte à réaliser un emboîtement d'une deuxième extrémité de la poussette ;
- la housse comporte une fermeture zippée, des boutons pressions ou une bande velcro disposés dans le dos de ladite housse ;
- la housse est essentiellement réalisée en tissu ;
- les attaches supérieures sont réalisées en matériau élastique ;
- les attaches inférieures sont réalisées en tissu ;
- la housse comporte un rabat en tissu sur le haut de la housse ;
- l'ouverture supérieure et/ou l'ouverture inférieure sont élastiquement déformables.

Ainsi, les housses selon l'invention permettent de remédier aux inconvénients précédemment cités. Elles comportent à cet effet, par exemple, certaines caractéristiques parmi celles citées dans le paragraphe suivant, certaines de ces caractéristiques permettant une utilisation plus pratique de la housse sur la poussette. Ainsi, avantageusement :

La housse comporte trois ouvertures permettant le passage des sangles de sécurité. La housse contient une alaise qui en épouse la forme et la taille pour protéger la poussette des tâches. La housse est placée au moyen de deux attaches extensibles à chaque extrémité de la housse, qui permettent d'emboîter le dispositif à la poussette. En haut, le maintien de la housse est assuré par une bande extensible munie d'oeillets qui s'attachent à des boutons fixés sur la housse, qui permet d'adapter la housse à différents types de poussettes. En bas, la housse est maintenue par deux attaches de chaque côté, qui permettent une fixation sur les barres de la poussette. Le dos de la housse comporte une ouverture en haut et en bas pour permettre l'installation. La housse peut rester en place quand la poussette est fermée.

Selon des modes particuliers de réalisation :
- La housse peut être garnie de fermeture type fermeture à glissière, bande velcro ou boutons pressions pour permettre une installation plus pratique.
- La housse peut comporter en lieu et place des liens extensibles en haut de la housse des rabats en tissu quand le type de la poussette ne permet d'en faire le tour aisément ou pour celles dont le dos ne permet pas un telle attache, type poussette canne.
- La housse peut comporter des élastiques fixés en haut et sur les côtés pour permettre une manipulation plus pratique.
- La housse peut être simplifiée, sans qu'une alaise ne soit insérée, pour être plus légère.

Les dessins annexés illustrent un exemple particulier, non limitatif, de réalisation selon l'invention :

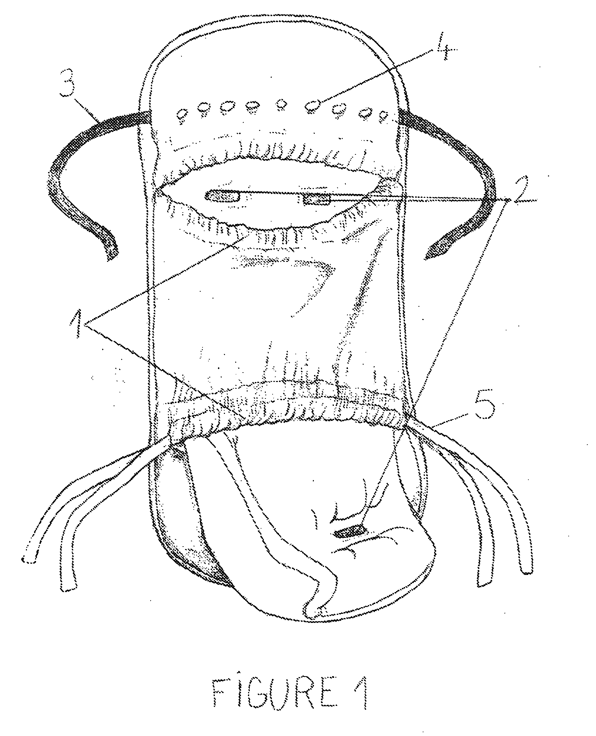

La figure 1 représente l'installation d'un exemple de housse selon l'invention sur un siège de poussette amovible, vu de dos

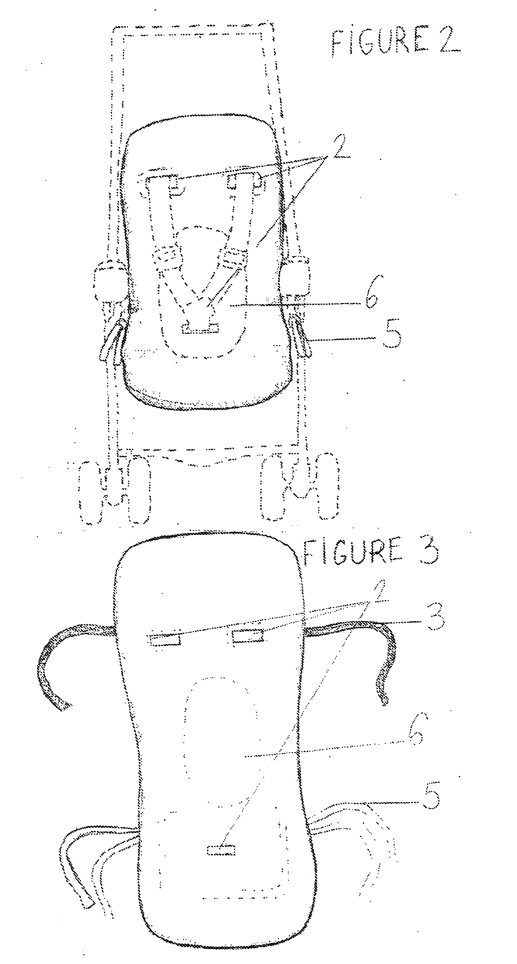

La figure 2 représente la housse de la figure 1 sur une poussette vue de face
La figure 3 représente la housse pour poussette de la figure 1 vue de face

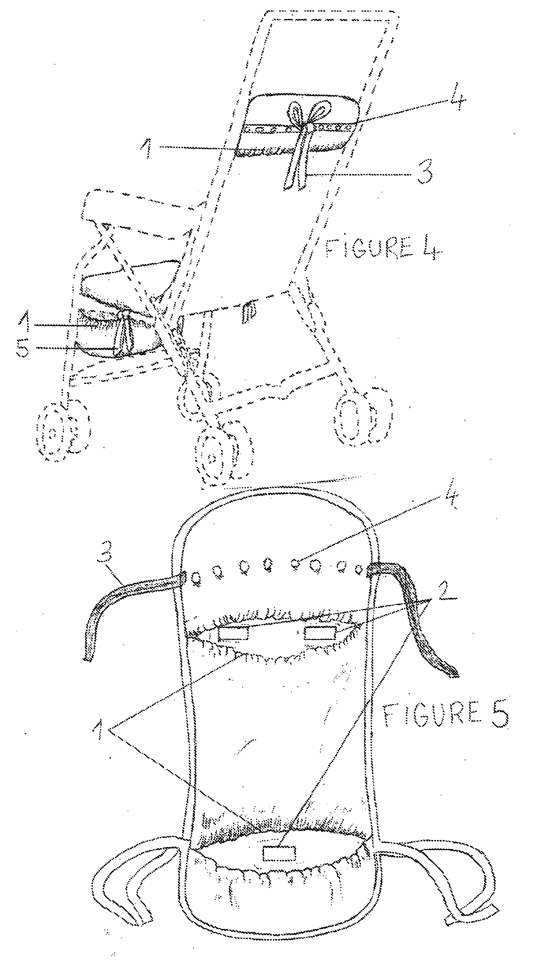

La figure 4 représente la housse de la figure 1 sur une poussette vue de dos
La figure 5 représente la housse pour poussette de la figure 1 vue de dos

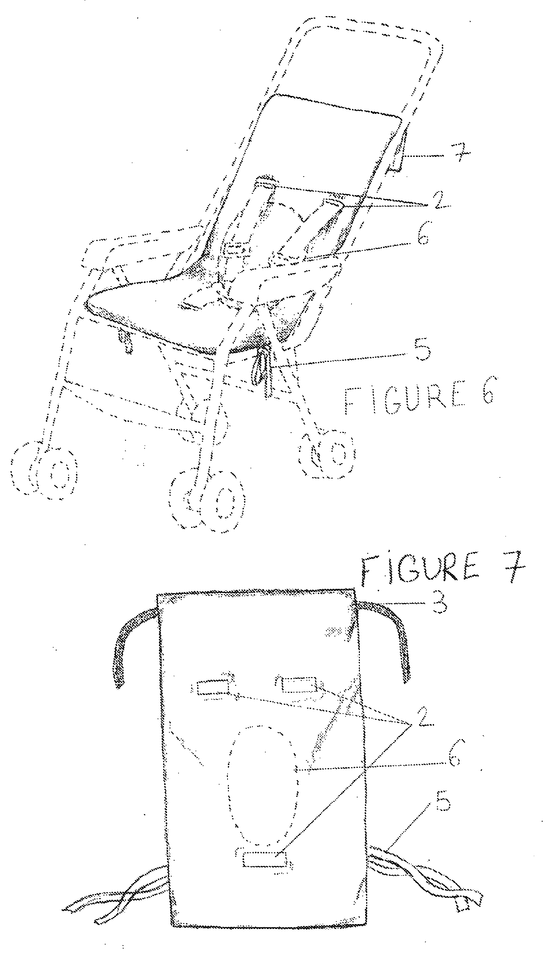

La figure 6 représente une housse selon l'invention sur une poussette type poussette canne vue de face
La figure 7 représente la housse pour poussette de la figure 6 canne vue de face

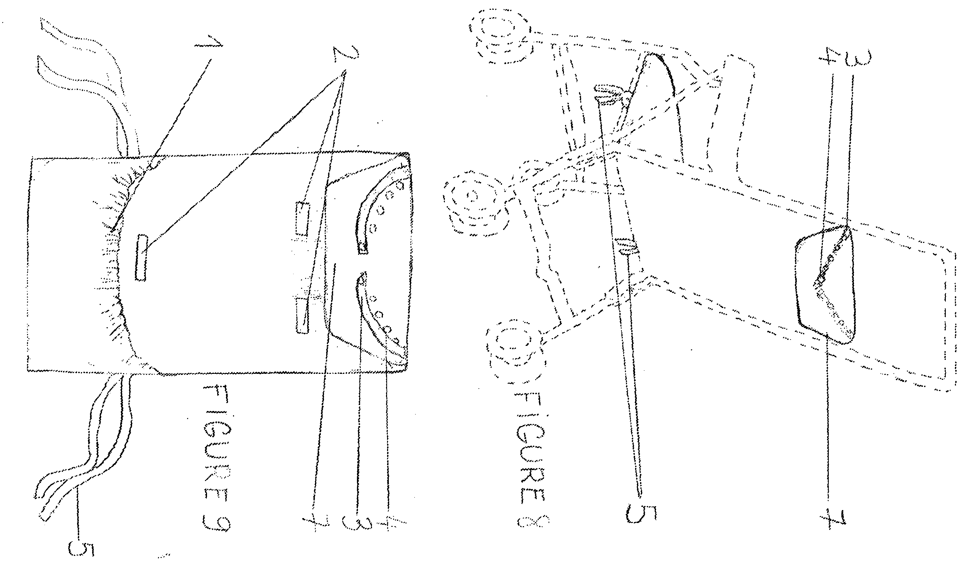

La figure 8 représente la housse de la figure 6 sur une poussette type poussette canne vue de dos
La figure 9 représente la housse de la figure 6 pour poussette canne vue de dos

La housse selon l'invention est avantageusement réalisée essentiellement, c'est-à-dire majoritairement, éventuellement à l'exception des différents moyens de maintien, en tissu. Dans d'autres exemples de réalisation, on prévoit de réaliser la housse essentiellement en matériau de type serviette éponge extensible.

Sur le premier dessin, la housse est constituée d'emboitements extensibles 1 au travers desquels on aperçoit les ouvertures (2) prévues pour le passage des sangles de sécurité. Le système d'attache est constitué d'attaches élastiques (3) en haut, réglable grâce aux boutons situés sur la housse (4), tandis que le bas de la housse est maintenu grâce à des liens en tissu (5). Dans d'autres exemples de réalisation, les attaches supérieures (3) sont réalisées en tissu ou en tout autre matériau adapté ; et les attaches inférieures (5) sont réalisées en matériau élastique, ou en tout autre matériau adapté.

Sur le deuxième dessin, la housse est installée sur un modèle de poussette classique. Les ouvertures (2) permettent de faire passer les sangles de sécurité. La housse est maintenue par des liens en tissu (5) et l'alaise (6) ajoute au confort de la housse.

Sur le troisième dessin, la housse de face présente trois ouvertures (2). Les attaches en matière élastique (3) et en tissu (5) permettent la fixation de la housse sur la poussette. L'alaise (6) contribue au confort de l'enfant.

Sur le quatrième dessin, sur une poussette vue de dos, les emboîtements élastiques (1) permettent l'installation de la housse sur la poussette. La housse est maintenue par des liens de tissu (5) en bas. Le haut de la housse est ajusté grâce aux élastiques (3) fixés aux boutons (4).

Sur le cinquième dessin, la housse vue de dos est constituée d'emboîtements extensibles (1) au travers desquels on aperçoit les ouvertures (2) prévues pour le passage des sangles de sécurité. Le système d'attaches est constitué d'attaches élastiques (3) en haut, réglable grâce aux boutons situés sur la housse (4), tandis que le bas de la housse est maintenu grâce à des liens en tissu (5).

Sur le sixième dessin, présentant une variation pour l'utilisation sur poussette canne, les ouvertures (2) permettent de faire passer les sangles de sécurité. La housse est maintenue par des liens en tissu (5) et l'alaise (6) ajoute au confort de la housse. Un rabat (7) en tissu permet de maintenir la housse sur la poussette.

Sur le septième dessin, la housse pour poussette canne présente trois ouvertures (2). Les attaches en matière élastiques (3) et en tissu (5) permettent la fixation de la housse sur la poussette. L'alaise (6) contribue au confort de l'enfant.

Sur le huitième dessin, la housse pour poussette canne vue de dos est installée grâce au rabat (7), sur lequel la lanière élastique (3) est fixée grâce aux boutons (4). La housse est par ailleurs maintenue en bas grâce aux liens de tissu (5).

Sur le neuvième dessin, la housse pour poussette canne est constituée d'un unique emboîtement élastique (1) pour le maintien sur le bas de la poussette. La housse est maintenue par le haut grâce au rabat (7), sur lequel les bandes élastiques (3) sont accrochées grâce aux boutons (4). Les lanières en tissu (5) permettent le maintien de la housse sur les barres de la poussette.

## Revendications

1. Housse pour protéger les poussettes comportant au moins trois ouvertures (2), une alaise (6), des attaches supérieures (3) disposées en haut de la housse, lesdites attaches supérieures présentant une longueur ajustable au moyen de boutons (4), et des attaches inférieures (5) disposées en bas de la housse destinées à assurer une fixation à des barres de la poussette, ladite housse présentant une ouverture inférieure (1) apte à réaliser un emboîtement d'une première extrémité de la poussette.

2. Housse selon la revendication 1 **caractérisée en ce qu'**elle comporte une ouverture supérieure (1) apte à réaliser un emboîtement d'une deuxième extrémité de la poussette.

3. Housse selon l'une au moins des revendications précédentes, **caractérisée en ce qu'**elle comporte une fermeture zippée, des boutons pressions ou une bande velcro disposés dans le dos de ladite housse.

4. Housse selon l'une au moins des revendications précédentes **caractérisée en ce que** elle est essentiellement réalisée en tissu.

5. Housse selon l'une au moins des revendications précédentes **caractérisée en ce que** les attaches supérieures (3) sont réalisées en matériau élastique.

6. Housse selon l'une au moins des revendications précédentes **caractérisée en ce que** les attaches inférieures (5) sont réalisées en tissu.

7. Housse selon l'une au moins des revendications précédentes **caractérisée en ce qu'**elle comporte un rabat en tissu sur le haut de la housse (7).

8. Housse selon l'une au moins des revendications 2 à 7 **caractérisée en ce que** l'ouverture supérieure et/ou l'ouverture inférieure sont élastiquement déformables.

## Claims

1. A cover to protect strollers comprising at least three openings (2), a bed pad (6), upper ties (3) disposed at the top of the cover, said upper ties presenting an adjustable length by means of buttons (4), and lower ties (5) disposed at the bottom of the cover intended to ensure fixation to bars of the stroller, said cover presenting a lower opening (1) able to make a fitting for a first end of the stroller.

2. The cover according to claim 1 **characterized in that** the cover comprises an upper opening (1) able to make a fitting for a second end of the stroller.

3. The cover according to at least one of the previous claims, **characterized in that** the cover comprises a zipped closing, snap fasteners or a Velcro band disposed in the back of said cover.

4. The cover according to at least one of the previous claims **characterized in that** the cover is essentially made of fabric.

5. The cover according to at least one of the previous claims **characterized in that** the upper ties (3) are made of an elastic material.

6. The cover according to at least one of the previous claims **characterized in that** the lower ties (5) are made of fabric.

7. The cover according to at least one of the previous claims **characterized in that** the cover comprises a flap in fabric on the top of the cover (7).

8. The cover according to at least one of claims 2 to 7 **characterized in that** the upper opening and/or the lower opening are elastically deformable.

## Patentansprüche

1. Schutzüberzug für Sportkinderwägen, umfassend mindestens drei Öffnungen (2), eine Unterlage (6), obere Befestigungen (3), die oben am Überzug angeordnet sind, wobei die oberen Befestigungen eine mit Hilfe von Knöpfen (4) einstellbare Länge aufweisen, und untere Befestigungen (5), die unten an dem Überzug angeordnet und dazu bestimmt sind, um eine Befestigung an Stangen des Kinderwagens zu gewährleisten, wobei der Überzug eine untere Öffnung (1) aufweist, in die ein erstes Ende des Kinderwagens eingesteckt werden kann.

2. Überzug nach Anspruch 1, **dadurch gekennzeichnet, dass** er eine obere Öffnung (1) umfasst, in die ein zweites Ende des Kinderwagens eingesteckt werden kann.

3. Überzug nach mindestens einem der vorhergehenden Ansprüche, **dadurch gekennzeichnet, dass** er einen Zippverschluss, Druckknöpfe oder Klettverschlussbänder umfasst, die auf der Rückseite des Überzugs angeordnet sind.

4. Überzug nach mindestens einem der vorhergehenden Ansprüche, **dadurch gekennzeichnet, dass** er im Wesentlichen aus Stoff ist.

5. Überzug nach mindestens einem der vorhergehenden Ansprüche, **dadurch gekennzeichnet, dass** die oberen Befestigungen (3) aus einem elastischen Material sind.

6. Überzug nach mindestens einem der vorhergehenden Ansprüche, **dadurch gekennzeichnet, dass** die unteren Befestigungen (5) aus Stoff sind.

7. Überzug nach mindestens einem der vorhergehenden Ansprüche, **dadurch gekennzeichnet, dass** er einen Stoffumschlag oben am Überzug (7) umfasst.

8. Überzug nach mindestens einem der Ansprüche 2 bis 7, **dadurch gekennzeichnet, dass** die obere Öffnung und/oder die untere Öffnung elastisch verformbar sind.
